# EUROPEAN PATENT APPLICATION

(11) **EP 2 996 215 A1**
(43) Date of publication of application: **16.03.2016**
(21) Application number: 14275190.8
(22) Date of filing: 11.09.2014
(51) Int. Cl.: H02H 9/02

(54) **A voltage source converter**

(71) Applicant: ALSTOM Technology Ltd, 5400 Baden (CH)
(72) Inventor: BARTOSZ, Lukasik, SK10 2BZ (GB); MORENO MUNOZ, Francisco Jose, Stafford ST16 2QZ (GB); TRAINER, David Reginald, Derby DE24 0AQ (GB); OATES, Colin Donald Murray, Staffordshire ST17 0TL (GB); STURGESS, Jonathan, Stafford ST18 9PT (GB)
(74) Representative: Potter Clarkson LLP

(57) **Abstract**

A voltage source converter (10; 80; 90), for interconnecting first and second electrical networks, comprises a converter structure (12) which includes a first terminal (14) for connection to the first electrical network (16) and a second terminal (18) for connection to the second electrical network (20). The converter structure (12) also includes at least one module (38) that is connected between the first and second terminals (14, 18). The or each module (38) includes at least one energy storage device (40) and at least one switching element (46, 48). The or each energy storage element (40) and switching element (46, 48) are operable to selectively provide a voltage source. The converter structure (12) still further includes an integrated passive fault current limiter (54) that is configured to present a first impedance to a normal current (I_{N}) flowing in the voltage source converter (10; 80; 90) during normal operation of the voltage source converter (10; 80; 90), and is configured to present a second impedance to a fault current (I_{F}) flowing in the voltage source converter (10; 80; 90) during a fault condition. The first impedance is lower than the second impedance.

## Description

This invention relates to a voltage source converter.

In high voltage direct current (HVDC) power transmission networks alternating current (AC) power is typically converted to direct current (DC) power for transmission via overhead lines and/or under-sea cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance.

The conversion between DC power and AC power is also utilized in power transmission networks where it is necessary to interconnect the DC and AC electrical networks. In any such power transmission network, converters are required at each interface between AC and DC power to effect the required conversion; AC to DC or DC to AC. One such converter is a voltage source converter (VSC).

According to a first aspect of the invention there is provided a voltage source converter for interconnecting first and second electrical networks, the voltage source converter comprising a converter structure including:
a first terminal for connection to the first electrical network;
a second terminal for connection to the second electrical network;
at least one module connected between the first and second terminals, the or each module including at least one energy storage device and at least one switching element, the or each energy storage element and switching element being operable to selectively provide a voltage source; and
an integrated passive fault current limiter configured to present a first impedance to a normal current flowing in the voltage source converter during normal operation of the voltage source converter, and configured to present a second impedance to a fault current flowing in the voltage source converter during a fault condition, the first impedance being lower than the second impedance.

The passive nature of the fault current limiter permits its operation, i.e. the selective presentation of the first lower impedance or the second higher impedance, automatically and without the need for any form of active control, i.e. constant supervision, by, e.g. a person or control algorithm.

Meanwhile the said ability to present either a first lower impedance or a second higher impedance improves the performance of the voltage source converter of the invention compared to conventional voltage source converters.

Such improved performance is manifest firstly because a lower first impedance provides for better utilisation of a voltage in one of the electrical networks during normal operation of the voltage source converter, and thereby permits a given amount of power to be transferred between the first and second electrical networks with lower losses than those that would otherwise arise if, e.g. a higher fixed impedance was included.

Secondly, a second higher impedance provides a degree of protection to the or each switching element in the or each module between the first and second terminals during a fault condition, and so permits the use of lower current-rated switching elements (that are consequently both less bulky and less expensive), while at the same time avoiding the need for additional fixed impedances that, as mentioned above, would otherwise degrade the efficiency of the voltage source converter during its normal operation.

Preferably the second impedance is sufficiently high to limit the rate of increase of the fault current to a predetermined level.

The ability to present such a second impedance allows a predetermined rate of increase of fault current to be chosen so as to provide sufficient delay after initiation of the fault condition to permit the operation of a relatively slow-acting protection element, such as the opening of circuit breaker in one of the electrical networks, before the fault current exceeds the current rating of the or each switching element in the or each module.

The resulting ability to rely on a relatively slow-acting protection element permits the omission of a faster-acting protection element, such as a thyristor, from the or each module and thereby greatly reduces the complexity and cost of the or each such module.

Optionally the second impedance is sufficiently high to additionally limit the fault current to a level at or below the current rating of the or each switching element in the or each module.

Such a second impedance provides the voltage source converter of the invention with a fault ride through capability whereby the converter is able to withstand the fault condition without even the need to operate a relatively slow-acting protection element, e.g. a circuit breaker. Avoiding the need to operate such a protection element is particularly desirable since ordinarily it would interrupt the flow of power between the first and second electrical networks, and thereby inconvenience users of an associated power transmission scheme, because of a need thereafter for the voltage source converter to go through a start-up sequence and checks before the corresponding electrical network can be reconnected.

The fault current limiter may be or include a material which transitions between a first low impedance state and a second high impedance state according to the level of current flowing therethrough.

The fault current limiter being or including such a material desirably permits the automatic presentation of a first lower impedance or a second higher impedance without the need for any supervision by a person or control algorithm, and so readily facilitates a significant reduction in the complexity of the voltage source converter of the invention.

In a preferred embodiment of the invention the material is or includes a superconducting material which has a resistance that changes when the current flowing therethrough exceeds a current threshold.

Such a superconducting material is able to provide a desirably high ratio between the first and second impedances so as to allow for improved efficiency of the voltage source converter during its normal operation while also providing high fault current blocking performance during a fault condition.

Preferably the superconducting material is configured to provide the fault current limiter with non-linear resistance characteristics.

A fault current limiter that has non-linear resistance characteristics transitions between a first low impedance state and a second high impedance state according to the level of current flowing therethrough when either an alternating current or a direct current flows therethrough, and so provides a good deal of flexibility in terms of where within the converter structure it can be integrated.

The superconducting material may be configured to provide the fault current limiter with non-linear inductance characteristics.

A fault current limiter which has non-linear inductance characteristics can be optimised to transition between a first low impedance state and a second high impedance state when an alternating current flows therethrough.

Optionally the material is or includes a magnetic material which dissipates a greater amount of energy as the current flowing therethrough increases.

The dissipation of energy by such a magnetic material equates to a resistance. As such the magnetic material is able to provide a desired first lower impedance to allow efficient operation of the voltage source converter during its normal operation and also a second higher impedance with good fault current blocking performance during a fault condition.

In a further preferred embodiment of the invention the magnetic material is unmagnetised and becomes magnetised as the level of current flowing through it increases.

An unmagnetised magnetic material can be optimised to transition between a first low impedance state and a second high impedance state when an alternating current flows therethrough.

Preferably the magnetic material is premagnetised and becomes demagnetised as the level of current flowing through it increases.

A premagnetised magnetic material can optimised to transition between a first low impedance state and a second high impedance state when a direct current flows therethrough.

Optionally the voltage source converter includes an integrated passive fault current limiter connected between the first and second terminals in series with the or each module.

Arranging a first integrated passive fault current limiter in such a manner allows the fault current limiter to have a combination of alternating and direct current pass therethrough, and so increases the number of different types of material that the fault current limiter may be formed from or include.

In addition, such an arrangement permits the omission of a reactor element from between the first and second terminals. This reduces the voltage drop between the first and second terminals and so similarly reduces the losses incurred within the converter during the transfer of a given amount of power between the first and second electrical networks.

The voltage source converter may include an integrated passive fault current limiter connected in series between the first terminal and the first electrical network connected in use with the first terminal.

Preferably the voltage source converter includes an integrated passive fault current limiter connected in series between the second terminal and the second electrical network connected in use with the second terminal.

Such arrangements of an integrated passive fault current limiter relative to one or other of the first and second terminals desirably permits the optimisation of the said fault current limiter according to the nature, i.e. alternating or direct, of the current flowing therethrough.

In addition, the integration in certain embodiments of the invention of more than one passive fault current limiter in the converter structure allows each such fault current limiter to be or include a different type of material which has performance characteristics that are optimised according to the different position of the fault current limiter within the converter structure and the corresponding nature, i.e. alternating and/or direct, of the current which flows therethrough.

There now follows a brief description of preferred embodiments of the invention, by way of non-limiting example, with reference being made to the following figures in which:
Figure 1 shows a voltage source converter according to a first embodiment of the invention;
Figure 2 illustrates schematically the resistance characteristics of a first material included in respective passive fault current limiters which form a part of the voltage source converter shown in Figure 1;
Figure 3 illustrates schematically the effect of a said passive fault current limiter on a fault current flowing through a respective switching element within the voltage source converter shown in Figure 1 during a fault condition;
Figure 4 illustrates schematically the characteristics of a second material suitable for inclusion in a respective passive fault current limiter of the voltage source converter shown in Figure 1;
Figure 5 illustrates schematically the characteristics of a third material suitable for inclusion in a respective passive fault current limiter of the voltage source converter shown in Figure 1;
Figure 6 shows a voltage source converter according to a second embodiment of the invention;
Figure 7 illustrates the fault current at a first terminal of the voltage source converter shown in Figure 6 in the event of a fault condition arising in a first electrical network with which the voltage source converter is in use connected;
Figure 8 shows a voltage source converter according to a third embodiment of the invention; and
Figure 9 illustrates the fault current at a second terminal of the voltage source converter shown in Figure 8 in the event of a fault condition arising in a first electrical network with which the voltage source converter is in use connected.

A voltage source converter according to a first embodiment of the invention is designated generally by reference numeral 10.

The first voltage source converter 10 has a converter structure 12 which includes two first terminals 14, each of which is in-use connected with a first electrical network 16, and a second terminal 18, which in use is connected with a second electrical network 20. In the embodiment shown the first electrical network 16 is a direct current (DC) electrical network 22 and the two first terminals 14 define respective first and second DC terminals 24, 26. Meanwhile, the second electrical network 20 is an alternating current (AC) electrical network 28 and the second terminal 18 defines an AC terminal 30.

A first converter limb portion 32 extends between the first DC terminal 24 and the AC terminal 30 and a second converter limb portion 34 extends between the second DC terminal 26 and the AC terminal 30. More particularly the first voltage source converter 10 has a converter structure 12 which includes three pairs 36A, 36B, 36C of first and second converter limb portions 32A, 34A, 32B, 34B, 32C, 34C, each of which said pair 36A, 36B, 36C corresponds to a given phase of a three-phase electrical power system. Each converter limb portion 32A, 34A, 32B, 34B, 32C, 34C extends between a corresponding first or second DC terminal 24A, 24B, 24C, 26A, 26B, 26C and a corresponding AC terminal 30A, 30B, 30C.

In other embodiments of the invention the voltage source converter may include fewer than or more than three pairs of first and second converter limb portions depending on the number of phases of the associated electrical power system within which it is intended to operate.

Between each first and second terminal 14, 18, i.e. within each converter limb portion 32A, 34A, 32B, 34B, 32C, 34C that extends between a corresponding first or second DC terminal 24A, 24B, 24C, 26A, 26B, 26C and a corresponding AC terminal 30A, 30B, 30C, is included a plurality of series-connected modules 38.

Each module 38 includes an energy storage element 40 in the form of a capacitor 42, although other forms of energy storage element are also possible, and first and second switching elements 46, 48 which are connected in parallel with the energy storage element 40, i.e. capacitor 42.

In the embodiment shown each switching element 46, 48 includes a semiconductor device 50 in the form of, e.g. an Insulated Gate Bipolar Transistor (IGBT), which is connected in parallel with an anti-parallel diode 52. It is, however, possible to use other semiconductor devices in place of the IGBT.

The energy storage element 40 and switching elements 46, 48 are operable to selectively provide a voltage source. More particularly, the switching elements 46, 48 are connected in parallel with the capacitor 42 in a known half-bridge arrangement to define a 2-quadrant unipolar module 38. The switching elements 46, 48 selectively direct current through the capacitor 42 or cause current to bypass the capacitor 42 such that the module 38 can provide zero or positive voltage and can conduct current in two directions.

Between each first and second terminal 14, 18, i.e. within each converter limb portion 32A, 34A, 32B, 34B, 32C, 34C that extends between a corresponding first or second DC terminal 24A, 24B, 24C, 26A, 26B, 26C and a corresponding AC terminal 30A, 30B, 30C, is also included an integrated passive fault current limiter 54. Each such integrated passive fault current limiter 54 is connected in series with the corresponding plurality of series-connected modules 38.

Each passive fault current limiter 54 is integrated since it forms a constituent, integral part of the converter structure 12 of the first voltage source converter 10. Moreover, it is passive in the sense that it functions automatically without the need for any form of active control, i.e. constant supervision, by, e.g. a person or control algorithm.

Each passive fault current limiter 54 is configured to present a first impedance to a normal current I_{N} flowing in the first voltage source converter 10 during normal operation of the first voltage source converter 10. Each passive fault current limiter 54 is also configured to present a second impedance to a fault current I_{F} flowing in the first voltage source converter 10. The first impedance is lower than the second impedance, as is explained in more detail below.

Each passive fault current limiter 54 includes a material which transitions between a first low impedance and a second high impedance according to the level of current that is flowing through the passive fault current limiter 54.

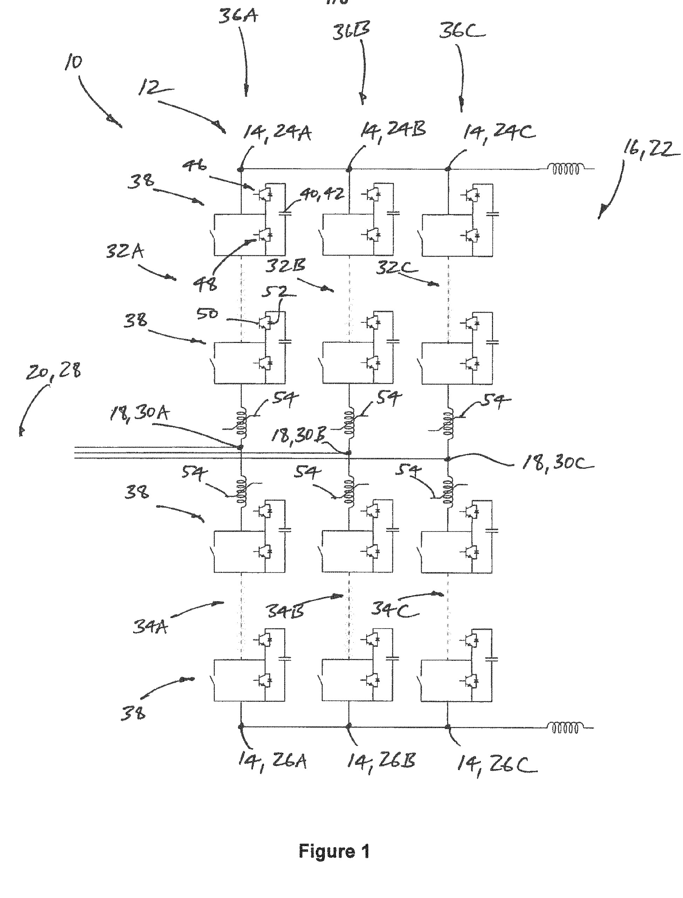

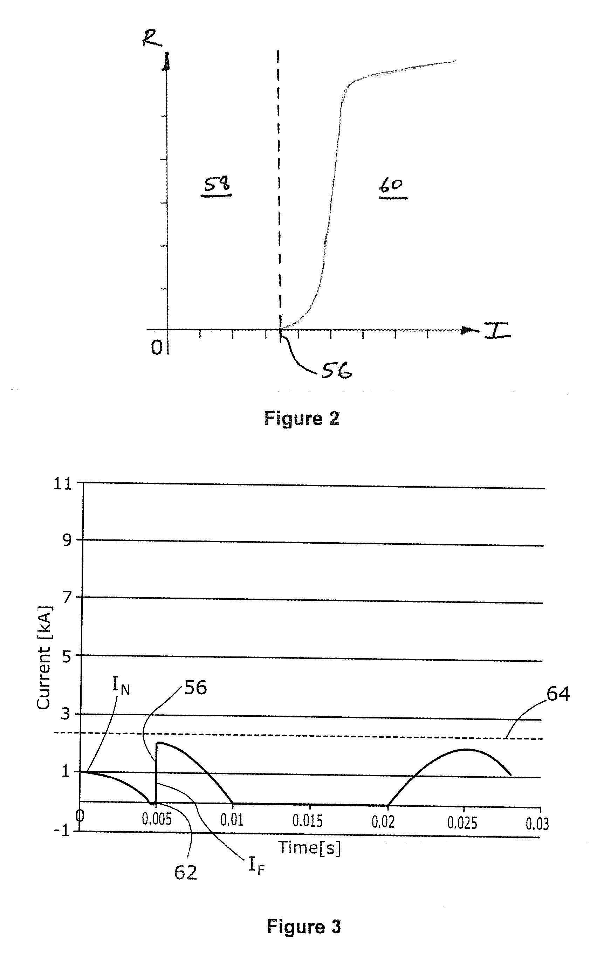

In the embodiment shown in Figure 1 each passive fault current limiter 54 includes a superconducting material which has a resistance R that changes when the current I flowing therethrough exceeds a current threshold 56, as illustrated schematically in Figure 2. When a low current I, i.e. a current below the current threshold 56, flows through the superconducting material it adopts a superconducting state 58 in which its resistance R is nearly zero, and when a higher current I, i.e. a current which exceeds the current threshold 56, flows through the superconducting material it adopts a highly resistive state 60 in which its resistance R is very high. The superconducting material in each passive fault current limiter 54 makes use directly of the aforementioned changes in its resistance to provide each said corresponding passive fault current limiter 54 with non-linear resistance characteristics.

Since the superconducting material in each passive fault current limiter 54 is configured to provide the said associated passive fault current limiter 54 with non-linear resistance characteristics, each such passive fault current limiter 54 manifests a change of impedance predominately as a change in resistance, and so each such passive fault current limiter 54 can have a current limiting effect against both alternating and direct currents.

During normal operation of the first voltage source converter 10 a combined voltage is built up within each converter limb portion 32A, 32B, 32C, 34A, 34B, 34C, via the insertion of the capacitors 42 of multiple modules 38 (with each module 38 providing its own voltage), which is higher than the voltage available from each individual module 38. In this manner each converter limb portion 32A, 32B, 32C, 34A, 34B, 34C is able to provide a stepped variable voltage source which permits the generation of a voltage waveform across each said converter limb portion 32A, 32B, 32C, 34A, 34B, 34C using a step-wise approximation. Operation of the converter limb portions 32A, 32B, 32C, 34A, 34B, 34C in this manner generates an AC voltage waveform at each respective AC terminal 30A, 30B, 30C, and thereby enables the first voltage source converter 10 to transfer power between the AC and DC electrical networks 28, 22.

During such normal operation of the first voltage source converter 10 a normal current I_{N} flows through the aforementioned capacitors 42, the corresponding switching elements 46, 48 and, in turn, through each corresponding passive fault current limiter 54.

This normal current I_{N} is, as illustrated schematically in Figure 3, smaller than the current threshold 56 and so the superconducting material included in each passive fault current limiter 54 adopts its superconducting state 58. As a consequence each passive fault current limiter 54 presents a very low first impedance to the said normal current I_{N}. Such a low first impedance is lower than the fixed impedance that is normally included within each limb portion of a conventional voltage source converter, and so better utilisation of, e.g. the DC voltage in the DC electrical network 22, is achieved thereby permitting a given amount of power to be transferred between the DC and AC electrical networks 22, 28 with lower losses than those that would arise in a conventional voltage source converter.

In the event of a short-circuit fault 62, e.g. in the DC electrical network 22, the resulting fault current I_{F} is able to flow through the anti-parallel diode 52 in the second switching element 48 of each module 38 in respective converter limb portions 32A, 32B, 32C, 34A, 34B, 34C and so the fault current I_{F} rises, as shown in Figure 3.

When the fault current I_{F} exceeds the current threshold 58 of the superconducting material included in each corresponding passive fault current limiter 54, the said superconducting material transitions into its highly resistive state 60. The respective passive fault current limiters 54 thereafter present a very high second impedance to the fault current I_{F}. The second impedance presented by each such passive fault current limiter 54 is sufficiently high to both limit the rate of increase of the fault current I_{F} and, more particularly, also limit the fault current I_{F} to a level below the current rating 64 of each switching element 46, 48, i.e. the current rating of each anti-parallel diode 52 through which the fault current I_{F} flows during a fault condition, as shown in Figure 3.

Such operation of the passive fault current limiters 54 permits the omission of a fast-acting protection element, such as a thyristor, from each module 38 and also provides a fault ride through capability whereby the first voltage source converter 10 is able to withstand the fault condition without even the need to operate a relatively slow-acting protection element, such as a circuit breaker in the AC electrical network 28, i.e. as indicated in Figure 3 the fault current I_{F} does not exceed the current rating 64 of the switching elements 46, 48 (i.e. the current rating of the associated anti-parallel diode 52) even after 20 milliseconds following occurrence of the fault condition.

In other embodiments of the invention (not shown) the superconducting material included in each passive fault current limiter 54 may instead be configured to present a second impedance during a fault condition that is sufficiently high only to limit the rate of increase of the fault current I_{F} to a predetermined level so as to provide sufficient delay after initiation of the fault condition to permit the operation of a relatively slow-acting protection element, i.e. the opening of circuit breaker in the AC electrical network 26, before the fault current I_{F} exceeds the current rating 64 of each switching element 46, 48 in each module 38.

In further embodiments of the invention the superconducting material included in one or more of the passive fault current limiters 54 may instead be configured to provide the corresponding passive fault current limiter 54 with non-linear inductance characteristics, such that the or each such corresponding passive fault current limiter 54 manifests a change of impedance predominately as a change of inductance. More particularly, the changes in resistance of the superconducting material may be used to build a non-linear inductance. The impedance effect of an inductance is manifest in the presence of an alternating current, and so a passive fault current limiter 54 formed from or including a superconducting material which is configured to provide the said passive fault current limiter 54 with non-linear inductance characteristics can be optimised to have a limiting effect on an alternating current.

In still further embodiments of the invention the material included in one or more of the passive fault current limiters 54, or from which one or more of the fault current limiters 54 may be formed, may be a magnetic material which dissipates a greater amount of energy as the current flowing through it increases.

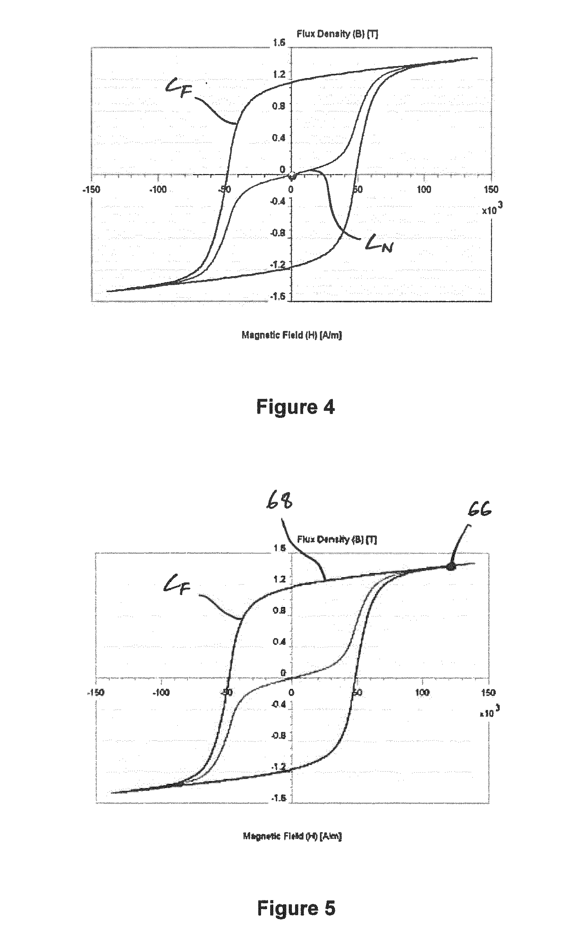

A first example of such a magnetic material is one which is initially unmagnetised and which becomes magnetised as the level of current flowing through it increases. More particularly, and as illustrated in Figure 4, when a low current flows through the material, i.e. a normal current I_{N} such as would flow during normal operation of a voltage source converter according to the invention, the level of current is not large enough to magnetise the material. As a result the energy dissipated in a corresponding normal condition hysteresis loop L_{N} (with the energy dissipated being equivalent to the area enclosed by the said loop L_{N}) is small. Moreover, since dissipated energy can be equated to a resistance, the resulting impedance of the corresponding passive fault current limiter 54 is also low.

However, as the current flowing through the unmagnetised material starts to rise, i.e. as occurs in respect of a fault current I_{F} resulting from, e.g. a short-circuit in a DC electrical network with which a voltage source converter of the invention may be connected, the characteristics of the unmagnetised material transition onto a wide, fault condition hysteresis loop L_{F}, as also shown in Figure 4. As mentioned above, as the unmagnetised material is cycled around the fault condition hysteresis loop L_{F} the energy dissipated in the device is equivalent to the area enclosed by a loop L_{F} which is therefore large, and so equates to a high impedance. Such operation of the unmagnetised material requires the material to be cycled around the fault condition hysteresis loop L_{F} and so the impedance is manifest predominately as a form of inductance. As a result such an unmagnetised material is well suited to limiting an alternating current.

A second example of such a magnetic material is one which is initially premagnetised and which becomes demagnetised as the level of current flowing through it increases.

As illustrated in Figure 5, when a low current flows through the material, i.e. during normal operation of a voltage source converter according to the invention, the premagnetised material operates at a first operating point 66, and the current flowing through it is not sufficiently large to demagnetise the said premagnetised material. Very little energy is dissipated by the material and as a consequence the impedance of an associated passive fault current limiter 54 in which the premagnetised material is included is low.

As the current flowing through the premagnetised material starts to rise, i.e. as occurs in respect of a fault current I_{F} resulting from, e.g. a short-circuit in a DC electrical network with which a voltage source converter of the invention may be connected, the premagnetised material starts to be demagnetised and its characteristics follow the upper curve of an associated wide, fault condition hysteresis loop L_{F}.

This process dissipates energy which is equivalent to the presentation by the associated passive fault current limiter 54 of a large impedance, e.g. within the corresponding converter limb portion 32A, 32B, 32C, 34A, 34B, 34C.

Once the corresponding converter limb portion 32A, 32B, 32C, 34A, 34B, 34C is momentarily disconnected the material in the said passive fault current limiters 54 will be magnetised in the opposite direction and the polarity of the passive fault current limiter 54 terminals (not shown) will have to be reversed.

Such a passive fault current limiter is therefore suitable for limiting a direct current, albeit only in one direction.

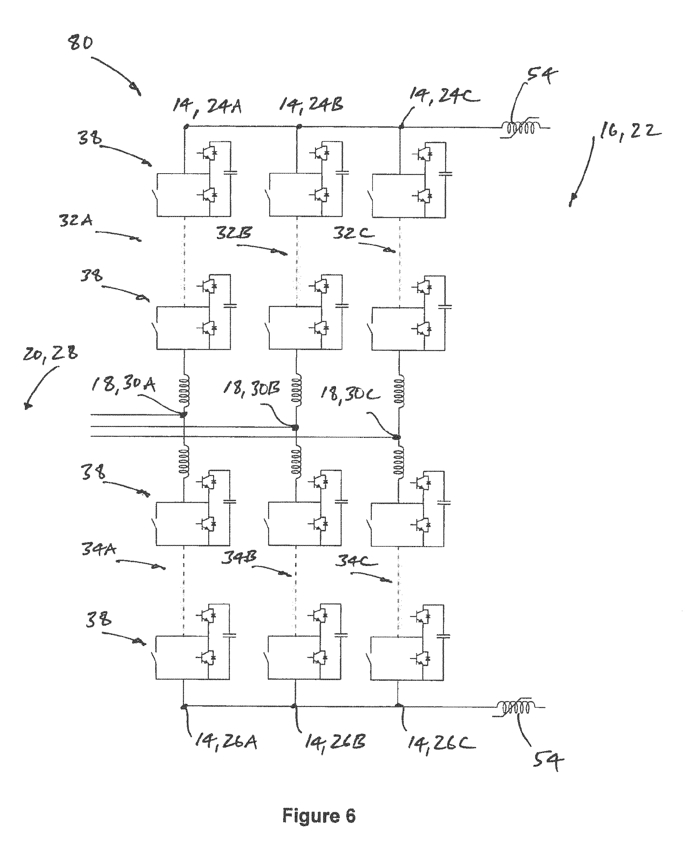

A voltage source converter 80 according to a second embodiment of the invention is shown schematically in Figure 6. The second voltage source converter 80 is similar to the first voltage source converter and like features share the same reference numerals.

The second voltage source converter 80 differs from the first voltage source converter 10 in that rather than each converter limb portion 32A, 32B, 32C, 34A, 34B, 34C including a passive fault current limiter 54, a passive fault current limiter 54 is instead connected in series between each first terminal 14 and the first electrical network 16, i.e. between each of the first and second DC terminals 24A, 24B, 24C, 26A, 26B, 26C and the DC electrical network 22.

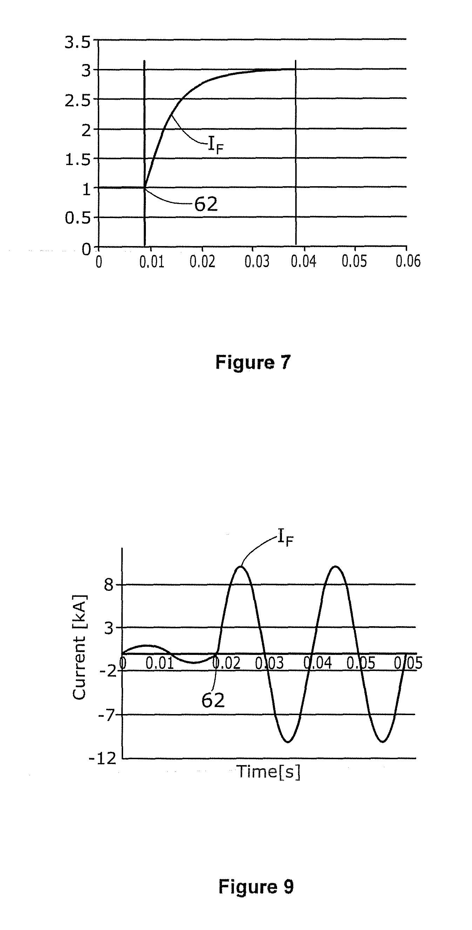

In the event of a short circuit 62 in the said DC electrical network 22 each such passive fault current limiter 54 has a fault current I_{F} flowing through it which initially rises and then settles to a steady state current level, i.e. as illustrated in Figure 7.

In view of the steady state nature of the fault current I_{F} flowing through each passive fault current limiter 54, i.e. the essentially direct current nature of the fault current I_{F}, the material from which each said passive fault current limiter 54 should be made, or each said passive fault current limiter 54 should include, is one which manifests a change of impedance as predominately a change in its resistance, or a material which is otherwise particularly optimised for limiting a direct current.

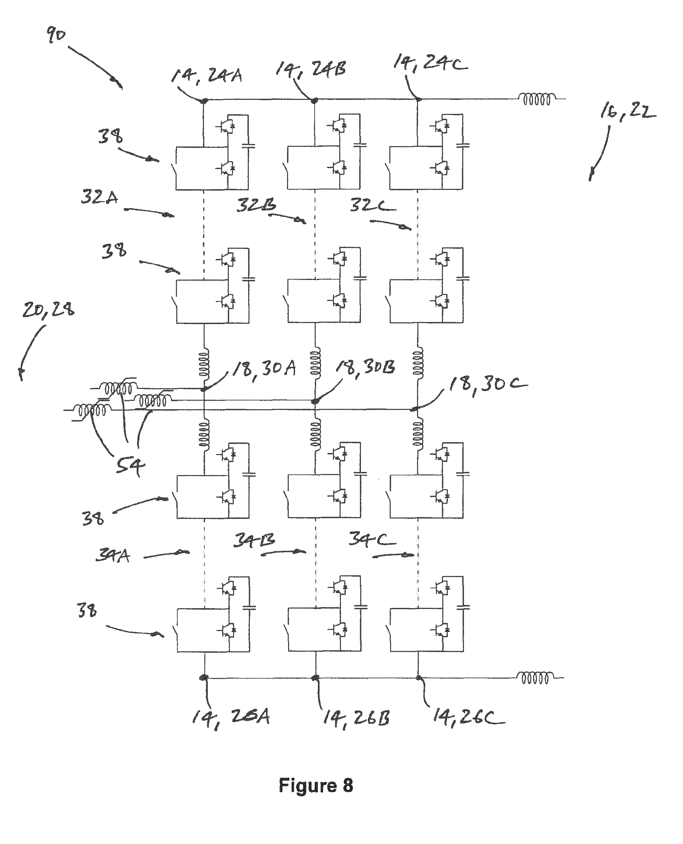

A voltage source converter 90 according to a third embodiment of the invention is shown schematically in Figure 8. The third voltage source converter 90 is similar to each of the first and second voltage source converters 10; 80 and like features share the same reference numerals.

The third voltage source converter 90 differs from each of the first and second voltage source converters 10; 80 in that a passive fault current limiter 54 is instead connected in series between each second terminal 18 and the second electrical network 20, i.e. between the AC terminal 30A, 30B, 30C corresponding to each phase, and the AC electrical network 28.

In the event of a short circuit 62 in the DC electrical network 22 each such passive fault current limiter 54 has a fault current I_{F} flowing through it which oscillates in first and second opposite directions, i.e. as illustrated in Figure 9.

In view of the oscillating nature, i.e. alternating nature, of the fault current I_{F} flowing through each passive fault current limiter 54, the material from which each said passive fault current limiter 54 should be made, or each said passive fault current limiter 54 should include, can be one which manifests a change of impedance as predominately either a change in its resistance or a change in its inductance.

Voltage source converters (not shown) according to still further embodiments of the invention may include passive fault current limiters 54 arranged in any combination of the positioning adopted in the first, second and third voltage source converters 10; 80; 90 described hereinabove.

For example, a further voltage source converter according to an embodiment of the invention may include a first passive fault current limiter in each converter limb portion and a second passive fault current limiter connected in series between the or each AC terminal and the AC electrical network.

The said first and second passive fault current limiters in such an embodiment may both be the same, i.e. may both be or include the same material, or they may be or include a different material which is optimised to limit the particular type of current (i.e. alternating or direct) which flows therethrough according to the position of the fault current limiter in the voltage source converter, i.e. alternating current when connected in series between an AC terminal and the AC electrical network; direct current when connected in series between a DC terminal and the DC electrical network; and a combination of alternating and direct currents when connected within a converter limb portion.

## Claims

1. A voltage source converter for interconnecting first and second electrical networks, the voltage source converter comprising a converter structure including:
a first terminal for connection to the first electrical network;
a second terminal for connection to the second electrical network;
at least one module connected between the first and second terminals, the or each module including at least one energy storage device and at least one switching element, the or each energy storage element and switching element being operable to selectively provide a voltage source; and
an integrated passive fault current limiter configured to present a first impedance to a normal current flowing in the voltage source converter during normal operation of the voltage source converter, and configured to present a second impedance to a fault current flowing in the voltage source converter during a fault condition, the first impedance being lower than the second impedance.

2. A voltage source converter according to Claim 1 wherein the second impedance is sufficiently high to limit the rate of increase of the fault current to a predetermined level.

3. A voltage source converter according to Claim 2 wherein the second impedance is sufficiently high to additionally limit the fault current to a level at or below the current rating of the or each switching element in the or each module.

4. A voltage source converter according to any preceding claim wherein the fault current limiter is or includes a material which transitions between a first low impedance state and a second high impedance state according to the level of current flowing therethrough.

5. A voltage source converter according to Claim 4 wherein the material is or includes a superconducting material which has a resistance that changes when the current flowing therethrough exceeds a current threshold.

6. A voltage source converter according to Claim 5 wherein the superconducting material is configured to provide the fault current limiter with non-linear resistance characteristics.

7. A voltage source converter according to Claim 5 wherein the superconducting material is configured to provide the fault current limiter with non-linear inductance characteristics.

8. A voltage source converter according to Claim 4 wherein the material is or includes a magnetic material which dissipates a greater amount of energy as the current flowing therethrough increases.

9. A voltage source converter according to Claim 8 wherein the magnetic material is unmagnetised and becomes magnetised as the level of current flowing through it increases.

10. A voltage source converter according to Claim 8 wherein the magnetic material is premagnetised and becomes demagnetised as the level of current flowing through it increases.

11. A voltage source converter according to any preceding claim including an integrated passive fault current limiter connected between the first and second terminals in series with the or each module.

12. A voltage source converter according to any preceding claim including an integrated passive fault current limiter connected in series between the first terminal and the first electrical network connected in use with the first terminal.

13. A voltage source converter according to any preceding claim including an integrated passive fault current limiter connected in series between the second terminal and the second electrical network connected in use with the second terminal.
